# EUROPÄISCHE PATENTSCHRIFT

(11) **EP 2 010 356 B1**
(45) Veröffentlichungstag und Bekanntmachung des Hinweises auf die Patenterteilung: **10.04.2013**
(21) Anmeldenummer: 07722893.0
(22) Anmeldetag: 22.02.2007
(51) Int. Cl.: B23P 19/06, B60B 29/00

(54) **SCHRAUBSYSTEM MIT VARIABEL ZUSTELLBAREN SCHRAUBSPINDELN**
SCREWING SYSTEM COMPRISING VARIABLY ADVANCING SCREWING SPINDLES
SYSTÈME DE VISSAGE À BROCHES DE VISSAGE À AVANCE VARIABLE

(30) Priorität: 12.04.2006 DE 102006017653
(43) Veröffentlichungstag der Anmeldung: 07.01.2009
(73) Patentinhaber: Robert Bosch GmbH, 70442 Stuttgart (DE)
(72) Erfinder: VOLLMUTH, Michael, 63165 Mühlheim am Main (DE); OEHME, Klaus, 74405 Gaildorf (DE)
(74) Vertreter: Thürer, Andreas
(86) Internationale Anmeldenummer: PCT/EP2007/001517
(87) Internationale Veröffentlichungsnummer: WO 2007/118544

(56) Entgegenhaltungen:
- EP-A- 0 544 102
- EP-A1- 0 203 370
- DE-C- 944 930
- JP-A- 8 197 347
- JP-A- 61 065 731
- JP-A- 2005 246 515
- US-A- 2 069 882

## Beschreibung

Die Erfindung befasst sich mit einem Verfahren zum Eindrehen von mehreren Befestigungsmitteln wie Schrauben und Muttern gemäß dem Oberbegriff des Anspruchs 1 und einer Vorrichtung gemäß dem Oberbegriff des Anspruchs 5 zur Durchführung des Verfahrens.

Ein soches Verfahren bzw. eine solche Vorrichtung sind aus DE 944930 C bekannten.

In der Offenlegungsschrift EP 0203 370 A 1 ist eine Schraubvorrichtung mit einem motorgetriebenem Schraubendreher gezeigt. Soll eine Vielzahl gleichartiger und entsprechend einer festgelegten geometrischen Form angeordneter Befestigungsmittel, beispielsweise Schrauben/Muttern zur Befestigung einer Felge, in möglichst kurzer Zeit eingeschraubt werden, so fällt bei Verwendung der oben genannten Schraubvorrichtung ein relativ hoher Arbeitsaufwand an, da die Schraubvorrichtung für jede Schraube/Mutter manuell neu ausgerichtet und angesetzt werden muss.

Die Druckschrift JP 61 065731 A zeigt einen mit Druckluft betriebenen Schrauber zum Anschrauben von Muttern an einem Rad.

Die Druckschrift JP 08 197347 A zeigt einen Schrauber bei dem vier Aufnahmealter in verschiedenen Achsen verwendet werden können, um beispielsweise Muttern festzuschrauben.

Die Druckschrift JP 2005246515 A zeigt ein Bauelement zum Anschrauben von mehreren Befestigungsmitteln, wobei Aufnahmealter für Muttern in einer horizontalen Ebene durch ein Hubelement gehoben werden können.

Die Druckschrift DE 944 930 C, die dem nächstliegenden Stand der Technik entspricht, zeigt einen Elektroschrauber zum gleichzeitigen Einschrauben von 4 Schrauben, die in einem vordefinierten Abstand voneinander angeordnet sind.

Die Druckschrift US-a-2 069 882 zeigt einen Mehrfachschrauber zum gleichzeitigen Betätigen oder Drehen von mehreren Befestigungsmitteln.

Die Druckschrift EP-A-0 203 370 zeigt eine Schraubvorrichtung mit motorgetriebenem Schraubendreher, die eine Drehmoment-Meßeinrichtung und eine Auswerteeinrichtung zur Drehmomentbegrenzung besitzt.

Die Aufgabe der Erfindung besteht darin, eine Gruppe von mehreren Befestigungsmitteln möglichst geringem Aufwand in ein Werkstück einzudrehen.

Die Aufgabe wird gelöst mittels eines Verfahrens gemäß Anspruch 1.

Es können je nach Werkstückvariante als Befestigungsmittel Schrauben/Muttern mit identischer oder unterschiedlicher Schlüsselweite oder anderer Form vorkommen.

Dieses Verfahren hat den Vorteil, dass das Schraubsystem an einer ortsfesten oder variablen Vorrichtung montiert und die Verschraubung automatisiert durchgeführt werden kann. Aufgrund der korrespondierenden Anordnung von Befestigungsmitteln und Schraubvorrichtungen kann eine Vielzahl geometrisch angeordneter, gleichartiger oder unterschiedlicher Befestigungsmittel, wie dies beispielsweise bei der Befestigung von Felgen an Kraftfahrzeugen üblich ist, gleichzeitig und damit zeitsparend in ein Werkstück eingedreht werden. Es ist auch von Vorteil, dass unterschiedliche Schrauben oder Muttern eindrehbar sind, da die Abtriebe auch unterschiedliche Werkzeuge, z.B. für andere Schlüsselweiten, oder andere Ausformung aufweisen können. Die Anzahl der erforderlichen Antriebe wird reduziert, Arbeitsraum, Gewicht und Kosten werden eingespart.

Bevorzugt kehren die Abtriebe nach Abschluss des Schraubvorganges wieder in die Ruheposition zurück, wodurch der Arbeitsraum optimal ausgenutzt werden kann.

Besonders bevorzugt umfasst die Schraubvorrichtung Vorschubabtriebe, welche auf Kreisbahnen mit unterschiedlichem Durchmesser angeordnet sind, wobei stets nur diejenigen Abtriebe ihre Ruheposition verlassen, welche auf einer Kreisbahn angeordnet sind, die wiederum mit einer Kreisbahn korrespondiert, auf der die Befestigungsmittel angeordnet sind und wobei die Anzahl der Vorschubabtriebe der Anzahl der Befestigungsmittel entspricht.

Hierdurch wird das Verfahren enorm flexibel, denn Produkte unterschiedlichster Abmessungen können innerhalb ein und derselben Fertigungslinie bearbeitet werden, ohne dass die Schraubvorrichtung angepasst werden muss.

Ganz besonders bevorzugt handelt es sich bei den Befestigungsmitteln um Schrauben/Muttern zur Befestigung von Felgen an Kraftfahrzeugen. Diese Schrauben/Muttern sind in der Regel innerhalb eines Teilkreisdurchmessers angeordnet, um die Felgen verwindungsfrei am Kraftfahrzeug zu befestigen. Das Verfahren ermöglicht es nun alle Schrauben/Muttern gleichzeitig mit identischem Drehmoment anzuschrauben. Es können Felgen für unterschiedliche Fahrzeugmodelle und Motorleistungen ohne unterbrechung des Arbeitsvorganges und ohne Umrüstung zeitsparend montiert werden.

Die Aufgabe wird ebenfalls gelöst mittels einer Vorrichtung gemäß Anspruch 5.

Es ergeben sich dieselben Vorteile wie bereits oben erwähnt. Außerdem kann ein kompaktes, leichtes Mehrfachschraubsystem realisiert werden.

Es sind Mittel vorgesehen, welche den Betrieb zweier Vorschubabtriebe mittels eines gemeinsamen Spindelantriebes ermöglichen. Die Mittel können von einem Blockabtrieb umfasst sein, welcher den Abtrieb der Gesamtausführung darstellt, indem er alle Abtriebe zusammenfasst. Es wird dann nur die halbe Anzahl an Spindelantrieben benötigt, z.B. für System 5-Lochfelgen mit 2 Teilkreisdurchmessern benötigt man nur 5 Spindelantriebe nicht 10. Ebenso baut dieses System kompakter gegenüber einem System das ebenso nur 5 Spindeln nutzt, aber mit einer elektro-/mechanischen Teilkreisdurchmesserverstellung arbeitet.

Die Vorrichtung umfasst eine erste Gruppe von mehreren, insbesondere 5, Vorschubabtrieben und eine zweite Gruppe von mehreren, insbesondere 5, Vorschubabtrieben die jeweils auf unterschiedlichen Kreisbahnen angeordnet sind, wobei die Radien dieser Kreisbahnen unterschiedlich sind und wobei für den wechselseitigen Betrieb von jeweils zwei Vorschubabtrieben auf unterschiedlichen Kreisbahnen ein gemeinsamer Spindelantrieb vorgesehen ist. Dies spart Kosten und Raum, da unmittelbar benachbarte Abtriebe einen gemeinsamen Spindelantrieb nutzen.

Besonders bevorzugt umfasst die Vorrichtung einen Vorschubabtrieb, der mittels eines pneumatisch, hydraulisch oder elektrisch betriebenen Aktuators in Form eines Zylinders realisiert ist, wobei dessen Kolbenstange als Welle mit Werkzeugaufnahme ausgebildet ist. Hierdurch wird die Realisierung einer Ruhe- und Arbeitsposition ermöglicht, um eine Verschraubung z.B. robotergeführt zu realisieren.

Alternativ kann auch durch eine reibschlüssig gelagerte Mutter mit von einer Schraubspindel angetriebenen Kugelroll- bzw. Gewindespindel ein Verfahren zwischen einem Ruhezustand und einer Arbeitsposition erreicht werden. Durch die nur reibschlüssig fixierte, gelagerte Mutter kann ein weiterdrehen zur Befestigung des Befestigungsmittels erreicht werden. Durch die Drehrichtungsumkehr wird die Ruheposition erreicht. Das Verdrehen der Schraubspindel wird verhindert, indem es auf einer Linearführung befestigt ist.

Beide Methoden tragen dazu bei, dass der Arbeitsraum optimal ausgenutzt werden kann.

Unterschiedliche Schraubenanordnungen, beispielsweise Schrauben/Muttern, die auf Kreisen unterschiedlicher Radien angeordnete sind, können mittels ein und derselben Schraubvorrichtung eingedreht werden, indem die für eine bestimmte Schraubenanordnung erforderlichen Abtriebe von der Ruheposition -in die Arbeitsposition gefahren werden und die nicht mehr benötigten Abtriebe von der Arbeitsposition in die Ruheposition gefahren werden.

Ganz besonders bevorzugt umfassen die Spindelantriebe einen elektrischen Motor, wobei der Motor mittels eines Getriebes, beispielsweise eines Planetengetriebes, die Welle des Vorschubabtriebes antreibt. Somit können bedarfsgerechte Drehmomente und Übersetzungen realisiert werden.

Vorzugsweise besteht das Getriebe aus mehreren Zahnrädern, wobei ein erstes Zahnrad an der Spindel des Spindelantriebs angeordnet ist und die Spindelrotation auf ein zweites Zahnrad überträgt und wobei dieses zweite Zahnrad die Rotation auf ein drittes Zahnrad überträgt, welches an der Welle angeordnet ist. Hierdurch kann die gewünschte Drehrichtung nach Bedarf konfiguriert werden. Der Einsatz von mehr als drei Zahnrädern für weitere Konfigurationen ist möglich, ebenso ist eine Übertragung durch einen Kettenantrieb oder Zahnriemenantrieb denkbar.

Vorzugsweise werden mittels eines Messwertgebers die Bewegungen der Welle und/oder das Drehmoment erfasst. Mit einer geeigneten Steuerung kann somit der Verlauf des Einschraubens exakt und Anwenderfreundlich gestaltet werden. Ebenso kann auch beispielsweise die Qualität der Verschraubung und die Arbeitsabläufe dokumentiert werden.

Verwendet man das Schraubsystem zur Montage von Felgen oder anderen Fahrzeugkomponenten gleicher oder unterschiedlicher Dimensionen, so können mit demselben Schraubsystem Felgen mit unterschiedlichen Teilkreisdurchmessern sowie mit unterschiedlichen Werkzeugen oder Werkzeugformen verschraubt werden. Dies spart Fertigungs- und Materialkosten ein, insbesondere auch, wenn die erfindungsgemäße Vorrichtung zur Bestückung von Kraftfahrzeugen mit Felgen eingesetzt wird, wobei die Vorrichtung insbesondere von einer Kraftfahrzeugfertigungslinie umfasst ist.

### Bezugszeichenliste:

- 11: Spindelantrieb
- 12: Getriebe
- 13: Zylinder
- 14: Kolben
- 15: Keilwelle
- 16: Druckluftanschluss
- 17: Abtrieb
- 18: Werkzeugaufnahme
- 19: Vorschubabtrieb
- 20: Doppelvorschubabtrieb
- 21: Schraubwerkzeug
- 22: Blockabtrieb mit Getrieben

Figur 1 zeigt einen Doppelvorschubabtrieb 20, welcher einen Teil der erfindungsgemäßen Schraubvorrichtung des erfindungsgemäßen Verfahrens darstellt.

Figur 2 zeigt eine erfindungsgemäße Vorrichtung in perspektivischer Darstellung werkzeugseitig.

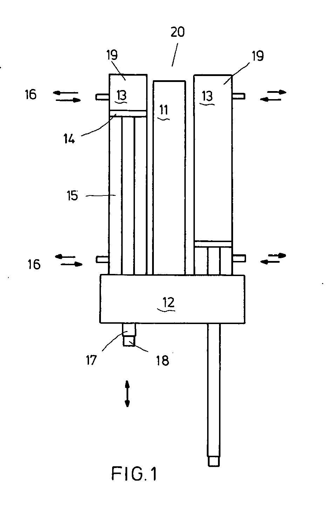

Der in Figur 1 dargestellte Doppelvorschubabtrieb 20 umfasst einen Spindelantrieb 11, ein Getriebe 12 und zwei Vorschubabtriebe19 mit jeweils einem Zylinder 13, einem Kolben 14, einer Keilwelle 15, zwei Druckluftanschlüssen 16 und einem Abtrieb 17 mit Werkzeugaufnahme 18.

Ein Spindelantrieb 11 treibt mittels des Getriebes 12 jeweils die Keilwellen 15 zweier Vorschubabtriebe 19 an, welche mittels des Kolbens 14 innerhalb des Zylinders 13 in Richtung der Drehachse einer Keilwelle 15 zusätzlich axial verschiebbar sind. Der Vorschub wird mittels Druckluft realisiert, indem mittels eines ersten Druckluftanschlusses (Figur 1 oben) 16 das Austreten der Keilwelle 15 aus dem Zylinder realisiert wird und mittels eines zweiten Druckluftanschlusses (Figur 1 unten) 16 das Zurückfahren der Keilwelle 15 in den Zylinder realisiert wird. Ein hydraulisch oder elektrisch betriebener Zylinder (z.B. mit Kugelumlaufspindel) wäre ebenfalls denkbar.

Aus Figur 1 ist deutlich sichtbar, dass einer der Abtriebe 17 in eine Arbeitsposition (rechts im Bild) ausgefahren ist und sich ein weiterer Abtrieb in der Ruheposition befindet (links im Bild). Ordnet man mehrere, beispielsweise 5 dieser Doppelvorschubabtriebe (bestehend jeweils aus zwei Vorschubabtrieben 19 und einem Spindelantrieb 11) kreisförmig an, so erhält man die erfindungsgemäße Schraubvorrichtung, wobei damit 2x5 Vorschubabtriebe 19 kreisförmig angeordnet sind, wobei aufgrund des Abstandes der Vorschubabtriebe 19 beide Kreise unterschiedliche Radien aufweisen. Es wird damit möglich eine Schraubvorrichtung zu realisieren, welche zur Montage von Felgen mit unterschiedlichem Teilkreisdurchmesser geeignet ist.

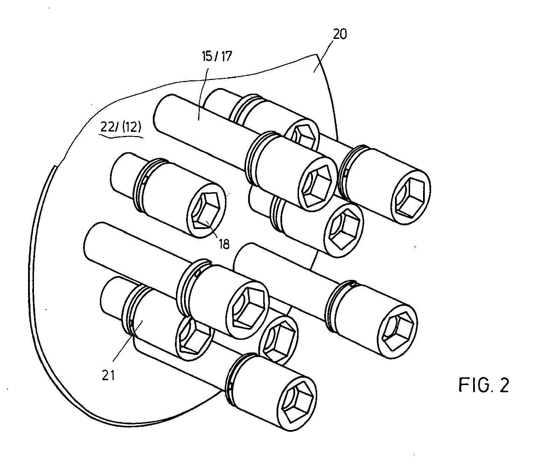

Aus Figur 2 ist erkennbar, dass die erfindungsgemäße Vorrichtung fünf Abtriebe 17 mit jeweils einem Schraubwerkzeug (Nuss 21) umfasst, welche auf einem äußeren Kreisumfang angeordnet sind, sowie fünf Abtriebe 17 mit jeweils einem Schraubwerkzeug (Nuss 21), welche auf einem inneren Kreisumfang angeordnet sind, wobei der Radius des Innenkreises geringfügig kleiner als der des Außenkreises ist. Die auf dem äußeren Kreis angeordneten Abtriebe 17 befinden sich in ihrer Arbeitsposition (ausgefahrene Keilwelle 15), die auf dem inneren Kreis angeordneten Abtriebe befinden sich in ihrer Ruheposition (eingefahrene Keilwelle 15). Die Keilwellen 15 der Vorschubabtriebe ragen auch in ihrer Ruhestellung aus dem Getriebegehäuse heraus (Spindelantriebe und Vorschubabtriebe sind nicht gezeigt). Der Blockabtrieb 22 umfasst die Getriebe zur Ansteuerung der Keilwellen 15.

## Patentansprüche

1. Verfahren zur Anbringung mehrerer, insbesondere auf einer Kreisbahn angeordneter, Befestigungsmittel unter Verwendung einer Schraubvorrichtung (20) mit korrespondierend zu den Befestigungsmitteln Vorschubabtrieben (19) mit jeweils ein Schraubwerkzeug (18) umfassenden Abtrieb 17 aufweisen, wobei in der Schraubvorrichtung (20) Mittel (12) vorgesehen sind, welche den Betrieb zweier Vorschubabtriebe (19) mittels eines gemeinsamen Spindelantriebes (11) wobei folgende Verfahrensschritte umfasst sind: Ausfahren der Abtriebe (17) aus einer Ruheposition in eine Arbeitsposition und Anordnung des Schraubwerkzeuges (18) an den Befestigungsmitteln sowie Eindrehen der Befestigungsmittel mittels der Abtriebe (17),
**dadurch gekennzeichnet, dass**
eine erste Gruppe von mehreren, insbesondere 5, Vorschubabtrieben (19) auf einer ersten Kreisbahn und eine zweite Gruppe von mehreren, insbesondere 5 Vorschubabtrieben (19) auf einer zweiten Kreisbahn angeordnet sind, wobei die Radien der Kreisbahnen unterschiedlich sind und wobei für den Antrieb von jeweils zwei Vorschubabtrieben (19), die auf unterschiedlichen Kreisbahnen angeordnet sind, ein Spindelantrieb (11) vorgesehen ist.

2. Verfahren nach Anspruch 1, wobei die Abtriebe (17) nach Abschluss des Schraubvorganges wieder in die Ruheposition zurückkehren.

3. Verfahren nach Anspruch 1 oder 2, wobei die Schraubvorrichtung (20) Vorschubabtriebe (19) umfasst, welche auf Kreisbahnen mit unterschiedlichem Durchmesser angeordnet sind, wobei stets nur diejenigen Abtriebe (17) ihre Ruheposition verlassen, welche auf derjenigen Kreisbahn angeordnet sind, die mit einer Kreisbahn korrespondiert, auf der die Befestigungsmittel angeordnet sind und wobei der Anzahl der Vorschubabtriebe (19) der Anzahl der Befestigungsmittel entspricht.

4. Verfahren nach Anspruch 3, wobei es sich bei den Befestigungsmitteln um Schrauben oder Muttern zur Befestigung von Gegenständen wie Felgen, Zahnrädern, Tellerrädern, Schwungrädern, Bremsscheiben und Radsätzen handelt, vorzugsweise an Karosserie, Motor oder Getriebe eines Kraftfahrzeuges.

5. Schraubvorrichtung (20) zur Anbringung von mehreren, insbesondere auf einer Kreisbahn angeordneten Befestigungsmitteln, umfassend mehrere Spindelantriebe (11) zum Antrieb von mehreren, insbesondere auf Kreisbahnen angeordneten, Vorschubabtrieben (19), wobei die Vorschubabtriebe (19) Schraubwerkzeuge (18) umfassen, wobei Mittel (12) vorgesehen sind, welche den Betrieb zweier Vorschubabtriebe (19) mittels eines gemeinsamen Spindelantriebes (11) ermöglichen,
**dadurch gekennzeichnet, dass**
eine erste Gruppe von mehreren, insbesondere 5, Vorschubabtrieben (19) auf einer ersten Kreisbahn und eine zweite Gruppe von mehreren, insbesondere 5, Vorschubabtrieben (19) auf einer zweiten Kreisbahn angeordnet sind, wobei die Radien der Kreisbahnen unterschiedlich sind und wobei für den Antrieb von jeweils zwei Vorschubabtrieben (19), die auf unterschiedlichen Kreisbahnen angeordnet sind, ein Spindelantrieb (11) vorgesehen ist.

6. Vorrichtung nach Anspruch 5, wobei ein Vorschubabtrieb (19) mittels eines pneumatisch, hydraulisch oder elektrisch betriebenen Aktuators in Form eines Zylinders (3) realisiert ist, dessen Kolbenstange als Welle (5) mit Werkzeugaufnahme (8) ausgebildet ist.

7. Vorrichtung nach Anspruch 6, wobei der Spindelantrieb (11) einen elektrischen Motor umfasst und wobei der Motor mittels eines Getriebes (12) die Welle (5) des Vorschubabtriebes (19) antreibt.

8. Vorrichtung nach Anspruch 7, wobei das Getriebe (12) aus mehreren Zahnrädern besteht, wobei ein erstes Zahnrad an der Spindel des Spindelantriebs (11) angeordnet ist und die Spindelrotation auf ein zweites Zahnrad überträgt und wobei dieses zweite Zahnrad die Rotation auf ein drittes Zahnrad überträgt, welches an der Welle (5) angeordnet ist.

9. Vorrichtung nach Anspruch 7, wobei das Getriebe (12) mittels Ketten oder Zahnriemen ausgeführt ist, um ein Drehmoment zu übertragen.

10. Vorrichtung nach einem der Ansprüche 6 - 9, wobei die jeweilige Spindel eines Spindelantriebes mittels einer elektrischen oder pneumatischen Kupplung in Eingriff gebracht wird.

11. Vorrichtung nach einem der Ansprüche 5 bis 10, wobei mittels eines Messwertgebers die Bewegungen der Welle und/oder das Drehmoment (5) erfassbar sind.

12. Vorrichtung nach einem der Ansprüche 5 bis 11, wobei diese zur Montage von Kraftfahrzeugkomponenten dient.

13. Vorrichtung zur Befestigung von Gegenständen wie Felgen, Zahnrädern, Tellerrädern, Schwungrädern, Bremsscheiben und Radsätzen für Kraftfahrzeuge oder Kraftfahrzeugkomponenten umfassend eine Schraubvorrichtung nach einem der Ansprüche 5 bis 12, wobei die Vorrichtung insbesondere von einer Kraftfahrzeugfertigungslinie umfasst ist.

## Claims

1. Method for the attachment of a plurality of fastening means arranged, in particular, on a circular path, using a screwing device (20) having, matching with the fastening means, feed drives (19), in each case with a drive (17) comprising a screwing tool (18), there being provided in the screwing device (20) means (12) which make it possible to operate two feed drives (19) by means of one common spindle drive (11), which method comprises the following method steps: extension of the drives (17) out of a position of rest into a working position and arrangement of the screwing tool (18) on the fastening means and also screwing-in of the fastening means by means of the drives (17),
**characterized in that**
a first group of a plurality of, in particular five, feed drives (19) are arranged on a first circular path and a second group of a plurality of, in particular five, feed drives (19) are arranged on a second circular path, the radii of the circular paths being different, and a spindle drive (11) being provided for driving in each case two feed drives (19) which are arranged on different circular paths.

2. Method according to Claim 1, the drives (17) returning into the position of rest again after the conclusion of the screwing operation.

3. Method according to Claim 1 or 2, the screwing device (20) comprising feed drives (19) which are arranged on circular paths of different diameter, only ever those drives (17) leaving their position of rest which are arranged on that circular path which matches with a circular path on which the fastening means are arranged, and the number of feed drives (19) corresponding to the number of fastening means.

4. Method according to Claim 3, the fastening means being screws or nuts for the fastening of articles, such as rims, gear wheels, crown wheels, flywheels, brake discs and wheel sets, preferably to the body, engine or transmission of a motor vehicle.

5. Screwing device (20) for attachment of a plurality of fastening means arranged, in particular, on a circular path, comprising a plurality of spindle drives (11) for driving a plurality of feed drives (19) arranged, in particular, on circular paths, the feed drives (19) comprising screwing tools (18), means (12) being provided which make it possible to operate two feed drives (19) by means of one common spindle drive (11), **characterized in that** a first group of a plurality of, in particular five, feed drives (19) are arranged on a first circular path and a second group of a plurality of, in particular five, feed drives (19) are arranged on a second circular path, the radii of the circular paths being different, and a spindle drive (11) being provided for driving in each case two feed drives (19) which are arranged on different circular paths.

6. Device according to Claim 5, a feed drive (19) being implemented by means of a pneumatically, hydraulically or electrically operated actuator in the form of a cylinder (3), the piston rod of which is designed as a shaft (5) with a toolholder (8).

7. Device according to Claim 6, the spindle drive (11) comprising an electric motor, and the motor driving the shaft (5) of the feed drive (19) by means of a gear (12).

8. Device according to Claim 7, the gear (12) consisting of a plurality of gear wheels, a first gear wheel being arranged on the spindle of the spindle drive (11) and transmitting the spindle rotation to a second gear wheel, and this second gear wheel transmitting the rotation to a third gear wheel which is arranged on the shaft (5).

9. Device according to Claim 7, the gear (12) being formed by means of chains or toothed belts in order to transmit a torque.

10. Device according to one of Claims 6 - 9, the respective spindle of a spindle drive being brought into engagement by means of an electric or pneumatic clutch.

11. Device according to one of Claims 5 to 10, the movements of the shaft and/or the torque (5) being detectable by means of a measurement transducer.

12. Device according to one of Claims 5 to 11, this serving for the mounting of motor vehicle components.

13. Device for the fastening of articles, such as rims, gear wheels, crown wheels, flywheels, brake discs and wheel sets for motor vehicles or motor vehicle components, comprising a screwing device according to one of Claims 5 to 12, the device, in particular, being incorporated in a motor vehicle production line.

## Revendications

1. Procédé pour monter plusieurs moyens de fixation disposés notamment sur une piste circulaire en utilisant un dispositif de vissage (20) avec des entraînements de sortie d'avance (19) correspondant aux moyens de fixation avec à chaque fois un entraînement de sortie (17) comprenant un outil de vissage (18), des moyens (12) étant prévus dans le dispositif de vissage (20), lesquels moyens permettent le fonctionnement de deux entraînements de sortie d'avance (19) au moyen d'un entraînement à broche commun (11), le procédé comprenant les étapes suivantes :
sortie des entraînements de sortie (17) hors d'une position de repos dans une position de travail et disposition de l'outil de vissage (18) sur les moyens de fixation avec vissage des moyens de fixation au moyen des entraînements de sortie (17),
**caractérisé en ce**
**qu'**un premier groupe de plusieurs entraînements de sortie d'avance (19), notamment un groupe de cinq, est disposé sur une première piste circulaire et un deuxième groupe de plusieurs entraînements de sortie d'avance (19), notamment un groupe de cinq, est disposé sur une deuxième piste circulaire, les rayons des pistes circulaires étant différents et un entraînement à broche (11) étant prévu pour l'entraînement de deux entraînements de sortie d'avance respectifs (19) qui sont disposés sur des pistes circulaires différentes.

2. Procédé selon la revendication 1, dans lequel les entraînements de sortie (17) reviennent à nouveau dans la position de repos après la fin de l'opération de vissage.

3. Procédé selon la revendication 1 ou 2, dans lequel le dispositif de vissage (20) comprend des entraînements de sortie d'avance (19) qui sont disposés sur des pistes circulaires de diamètres différents, les entraînements de sortie (17) qui sont disposés sur la piste circulaire correspondant à une piste circulaire sur laquelle sont disposés les moyens de fixation étant toujours les seuls à quitter leur position de repos, et le nombre d'entraînements de sortie d'avance (19) correspondant au nombre de moyens de fixation.

4. Procédé selon la revendication 3, les moyens de fixation étant des vis ou des écrous pour la fixation d'objets tels que des jantes, des roues dentées, des couronnes de différentiel, des volants d'inertie, des disques de frein et des jeux de roues, de préférence sur une carrosserie, un moteur ou une transmission d'un véhicule automobile.

5. Dispositif de vissage (20) pour monter plusieurs moyens de fixation disposés notamment sur une piste circulaire, comprenant plusieurs entraînements à broche (11) pour l'entraînement de plusieurs entraînements de sortie d'avance (19) disposés notamment sur des pistes circulaires, les entraînements de sortie d'avance (19) comprenant des outils de vissage (18), des moyens (12) étant prévus, lesquels permettent le fonctionnement de deux entraînements de sortie d'avance (19) au moyen d'un entraînement à broche commun (11),
**caractérisé en ce**
**qu'**un premier groupe de plusieurs entraînements de sortie d'avance (19), notamment un groupe de cinq, est disposé sur une première piste circulaire et un deuxième groupe de plusieurs entraînements de sortie d'avance (19), notamment un groupe de cinq, est disposé sur une deuxième piste circulaire, les rayons des pistes circulaires étant différents et un entraînement à broche (11) étant prévu pour l'entraînement de deux entraînements de sortie d'avance respectifs (19) qui sont disposés sur des pistes circulaires différentes.

6. Dispositif selon la revendication 5, dans lequel un entraînement de sortie d'avance (19) est réalisé sous forme d'un cylindre (3) au moyen d'un actionneur à commande pneumatique, hydraulique ou électrique, la tige de piston du cylindre étant réalisée sous forme d'arbre (5) avec un porte-outil (8).

7. Dispositif selon la revendication 6, dans lequel l'entraînement à broche (11) comprend un moteur électrique et dans lequel le moteur entraîne l'arbre (5) de l'entraînement de sortie d'avance (19) au moyen d'une transmission (12).

8. Dispositif selon la revendication 7, dans lequel la transmission (12) se compose de plusieurs roues dentées, une première roue dentée étant disposée sur la broche de l'entraînement à broche (11) et transmettant la rotation de la broche à une deuxième roue dentée et cette deuxième roue dentée transmettant la rotation à une troisième roue dentée qui est disposée sur l'arbre (5).

9. Dispositif selon la revendication 7, dans lequel la transmission (12) est réalisée au moyen de chaînes ou de courroies dentées afin de transmettre un couple.

10. Dispositif selon l'une quelconque des revendications 6 à 9, dans lequel la broche respective d'un entraînement à broche est amenée en prise au moyen d'un accouplement électrique ou pneumatique.

11. Dispositif selon l'une quelconque des revendications 5 à 10, dans lequel les mouvements de l'arbre et/ou le couple (5) peuvent être détectés au moyen d'un détecteur de valeur de mesure.

12. Dispositif selon l'une quelconque des revendications 5 à 11, servant au montage de composants de véhicules automobiles.

13. Dispositif pour fixer des objets tels que des jantes, des roues dentées, des couronnes de différentiel, des volants d'inertie, des disques de frein et des jeux de roues pour véhicules automobiles ou des composants de véhicules automobiles, comprenant un dispositif de vissage selon l'une quelconque des revendications 5 à 12, le dispositif étant notamment inclus dans une chaîne de montage de véhicules automobiles.
